# DEMANDE DE BREVET EUROPEEN

(11) **EP 1 031 746 A1**
(43) Date de publication de la demande: **30.08.2000**
(21) Numéro de dépôt: 00400379.4
(22) Date de dépôt: 10.02.2000
(51) Int. Cl.: F16C 33/08

(54) **Procédé et dispositif de montage des coussinets supérieurs dans les logements d'un carter cylindre**

(30) Priorité: 19.02.1999 FR 9902070
(71) Demandeur: Renault, 92109 Boulogne Billancourt (FR)
(72) Inventeur: Bischoffe, Emmanuelle, 92100 Boulogne Billancourt (FR)

(57) **Abrégé**

Procédé de montage des coussinets supérieurs (3) dans le carter cylindre (1) d'un moteur à combustion interne, caractérisé en ce que:
- les coussinets (3) sont disposés sur un support fixe (8),
- le carter (1), est abaissé avec sa face culasse (1a) vers le haut en direction du support (8), par une pince (7), jusqu'à ce que les logements (2) des coussinets viennent reposer sur ces derniers, et
- le carter (1) est relevé par la pince (7) à l'écart du support en retenant les coussinets (3) dans leurs logements (2).

## Description

La présente invention se rapporte au montage des coussinets supérieurs dans les logements d'un carter cylindre de moteur à combustion interne.

Selon une technique de montage habituelle sur les chaînes d'assemblage de moteurs, la mise en place des coussinets supérieurs dans le carter cylindre s'effectue alors que celui-ci repose sur sa face culasse, et les coussinets sont positionnés, soit à la main par un opérateur en ligne, soit au moyen de systèmes mécaniques composés d'outils de retenue, ou 〈〈de rétreint 〉〉, pinçant le coussinet avant qu'il soit 〈〈emmanché〉〉 dans le carter, par exemple au moyen de poussoirs tarés avec des ressorts, et d'axes numérisés, pour obtenir un positionnement précis.

Ce mode de montage présente des risques de perte de certains coussinets mal insérés, et nécessite un travail de cotation très précis sur ces derniers, pour parvenir à les serrer fortement dans leurs logements.

La présente invention vise à minimiser le temps de montage des coussinets, en réduisant leurs risques de perte.

Elle propose dans ce but que les coussinets soient disposés sur un support fixe, que le carter soit abaissé avec sa face culasse orientée vers le haut en direction du support par une pince jusqu'à ce que les logements des coussinets viennent reposer sur ces derniers, et que le carter soit relevé par la pince à l'écart du support en retenant les coussinets dans leurs logements.

Conformément à l'invention, les coussinets sont resserrés par leurs logements sous l'effet de la masse du carter.

Ce serrage permet de retenir élastiquement les coussinets dans leurs logements.

L'invention concerne également un dispositif comportant d'une part un support fixe pouvant recevoir l'ensemble des coussinets supérieurs, et d'autre part une pince de transport du carter permettant d'abaisser ce dernier jusqu'au support avec sa face culasse orientée vers le haut de laisser reposer sa masse sur le support pour saisir les coussinets, et de relever le carter à l'écart du support en emportant lesdits coussinets dans leurs logements.

D'autres caractéristiques et avantages de l'invention apparaîtront clairement à la lecture de la description suivante d'un mode de réalisation particulier de celle-ci, en liaison avec les dessins annexés, sur lesquels:
- la figure 1 représente un carter cylindre de type connu, reposant sur sa face culasse,
- les figures 2A, et 2B illustrent la déformation d'un coussinet lors de son montage dans le carter-cylindre,
- la figure 3 est une vue en perspective d'un vilebrequin de type connu,
- la figure 4 illustre l'invention.

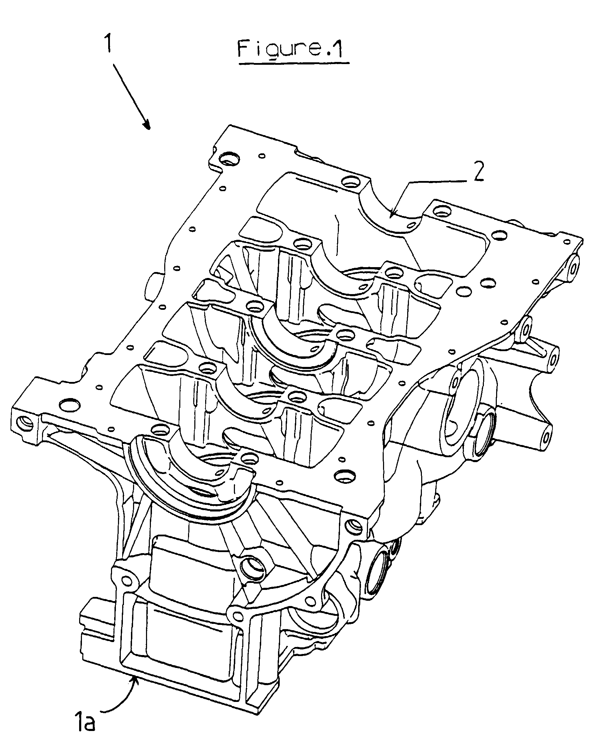

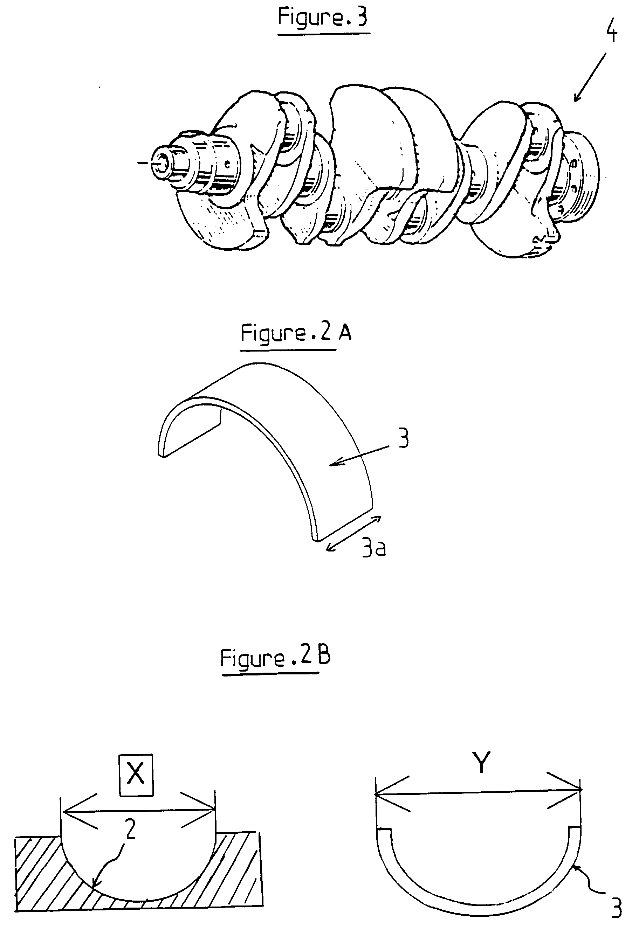

Sur la figure 1, on a représenté un carter cylindre 1 de moteur de type connu à quatre cylindres, sa face culasse 1a orientée vers le bas, de façon à montrer les logements 2, destinés à recevoir ses coussinets supérieurs. Comme indiqué plus haut, c'est dans cette position, que les coussinets supérieurs 3 (illustrés par les figures 2A et 2B), sont habituellement mis en place dans les logements 2.

L'invention permet de monter des coussinets de toute forme. Le coussinet 3 montré par les figures 2A et 2B, à la seule fin d'illustrer de façon non limitative la description de l'invention, est constitué d'un demi cylindre de faible épaisseur en acier, avec un revêtement en alliage, qui se monte dans les logements 2 de la figure 1. La fonction des coussinets supérieurs 3 d'un carter cylindre, est de supporter le vilebrequin du moteur (tel que le vilebrequin 4 illustré de façon non limitative par la figure 3), pour protéger le carter des déformations et des dégradations que pourrait entraîner la rotation directe du vilebrequin dans celui-ci.

La figure 2B, sur laquelle Y représente le diamètre du coussinet 3 avant montage, et X celui du logement 2, dans lequel celui-ci doit s'insérer, n'a aucune valeur en ce qui concerne les courbures et les dimensions relatives du coussinet et de son logement. Elle vise simplement à souligner la nécessité de déformer les coussinets par serrage avant leur mise en place dans leurs logements, étant entendu que, plus la déformation des coussinets à l'insertion est importante, plus leurs risques de perte sont réduits.

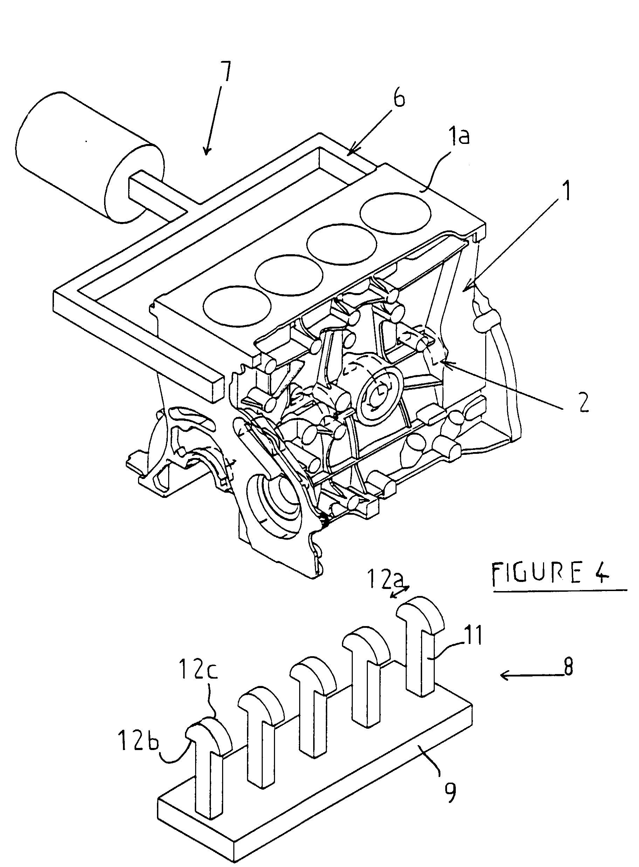

La figure 4, relative à l'invention, montre le même carter-cylindre 1 que la figure 1, mais l'invention s'applique dans les mêmes conditions à un moteur ayant un nombre de cylindres différent de quatre. Ce carter est retourné par rapport à la figure 1, sa face culasse 1a étant désormais orientée vers le haut, et ses logements de coussinets 2, orientés vers le bas. L'invention n'est cependant pas limitée au cas d'un moteur à quatre cylindres, et permet dans les même conditions, le montage des coussinets avec un nombre différent de cylindres. Le carter 1 de la figure 4 est pris entre les mors 6 d'une pince 7. Conformément à l'invention, c'est dans cette position que s'effectue la mise en place des coussinets 3 supérieurs, avec l'intervention du support fixe 8 apparaissant sur cette figure.

Le support 8 est composé d'une embase 9, sur laquelle sont dressés des éléments d'appui verticaux 11, en forme générale de T, en nombre égal aux logements de coussinets 2. Ce nombre correspond, en principe, au nombre de cylindres du moteur, augmenté d'une unité. Chaque élément 11 du support 8, présente une partie supérieure 12, dont l'épaisseur 12a correspond à la largeur 3a des coussinets (cf figure 2A), fixée par une face plane 12b sur le pied 13 de l'élément 11. Sa face convexe 12c reçoit un coussinet 3 et repousse celui-ci, face convexe orientée vers le haut, au fond d'un logement 2 du carter cylindre 1, lors de l'abaissement de ce dernier.

Comme indiqué plus haut, l'invention permet de positionner les coussinets 3 dans les logements 2 du carter cylindre 1, simultanément et sans effort extérieur. A cet effet l'ensemble des coussinets supérieurs 3 du carter-cylindre est disposé dans un premier temps, par exemple par un opérateur, sur les éléments 11 du support 8, face convexe vers le haut. Conformément à l'invention le support 8 reste immobile pendant toutes l'opération, et c'est le carter 1, qui est abaissé, face culasse 1a orientée vers le haut, entre les mors 6 de la pince 7, et sous le contrôle de celle-ci, en direction des coussinets 3, mis préalablement en place sur les éléments 11.

La pince 7 est fixée sur un robot, ou sur une machine d'assemblage (non représentés). En fin de course d'abaissement de la pince, lorsque le carter 1 vient reposer sur le support 8, son poids est suffisamment élevé pour assurer le serrage des coussinets sur eux-mêmes, et les introduire dans les logements 2 où ils sont retenus par leur mise en contrainte élastique. L'insertion s'effectue donc sans recourir à aucun organe d'emmanchement (vérin ou autre). Enfin la pince est relevée à l'écart du support, et le carter 1 emporte avec lui vers le haut les coussinets 3 fixés à l'intérieur des logements 2.

Pour permettre le serrage et la fixation des coussinets 3 dans les logements 2 sous le poids du carter 1, tout en respectant les tolérances de positionnement de ce dernier vis-à-vis du support 8, les coussinets 3 présentent un léger jeu vis-à-vis des surfaces d'appui 12c des éléments 11. En effet, non seulement le rayon de courbure des coussinets 3 au repos doit être nettement supérieur à celui des logements 2 pour éviter tout risque de perte, mais les coussinets doivent disposer d'une liberté de mouvement suffisante sur leurs éléments d'appui pour pouvoir être déformés et saisis sur celles-ci, avant le retrait du carter 1. Dans ce but, les surfaces d'appui 12c des éléments 11 peuvent avantageusement être légèrement plus recourbés sur eux-mêmes que les coussinets 3 dans leur état initial, au moins sur une partie de leur longueur.

Les avantages de l'invention sont nombreux. En premier lieu, l'ensemble des opérations permettant le logement des coussinets supérieurs dans un carter cylindre sur la ligne d'assemblage du moteur est rapide, car tous ces coussinets sont emmanchés en une seule fois. Par ailleurs, ces opérations peuvent être effectuées dans la continuité de certaines opérations de manutention préexistantes, telles que le transport du carter cylindre par un robot vers un poste de montage, et que son retournement. Grâce à l'invention, une simple opération de transport ou de retournement est mise à profit pour simplifier et sécuriser une tâche particulièrement minutieuse. Cette exploitation, liée à une utilisation judicieuse de la masse du carter-cylindre, simplifie considérablement l'intervention des opérateurs, sans introduire pour autant de nouvelle complexité mécanique sur la ligne d'assemblage. Enfin, il faut souligner que cette simplification est très peu onéreuse, puisque le matériel supplémentaire introduit sur la ligne se limite au support de coussinets.

## Revendications

**1.** Procédé de montage des coussinets supérieurs (3) dans le carter cylindre (1) d'un moteur à combustion interne, caractérisé en ce que:
- les coussinets (3) sont disposés sur un support fixe (8),
- le carter (1), est abaissé avec sa face culasse (1a) vers le haut en direction du support (8), par une pince (7), jusqu'à ce que les logements (2) des coussinets viennent reposer sur ces derniers, et
- le carter (1) est relevé par la pince (7) à l'écart du support en retenant les coussinets (3) dans leurs logements (2).

**2.** Procédé de montage selon la revendication 1, caractérisé en ce que les coussinets (3) sont serrés par leurs logements (2) sous l'effet de la masse du carter (1).

**3.** Procédé de montage selon la revendication 1 ou 2, caractérisé en ce que les coussinets (3) sont retenus dans leurs logements (2) par mise en contrainte élastique.

**4.** Procédé de montage selon la revendication 1, 2 ou 3, caractérisé en ce que les coussinets (3) ont initialement un rayon de courbure supérieur à celui de leurs logements (2).

**5.** Dispositif de montage de montage des coussinets supérieurs (3) dans le carter-cylindre (1) d'un moteur à combustion interne, caractérisé en ce qu'il comporte d'une part un support fixe (8) pouvant recevoir l'ensemble des coussinets supérieurs (3), et d'autre part une pince (7) de transport du carter (1) permettant d'abaisser ce dernier jusqu'au support (8) avec sa face culasse (1a) tournée vers le haut de laisser reposer sa masse sur le support pour saisir les coussinets (3), et de le relever à l'écart du support en emportant lesdits coussinets dans leurs logements (2).

**6.** Dispositif de montage selon la revendication 5, caractérisé en ce que le support (8) présente plusieurs éléments d'appui (11) incluant une partie supérieure (12) de forme convexe sur lesquelles les coussinets (3) sont mis en place.

**6.** Dispositif de montage selon la revendication 5, caractérisé en ce que coussinets (3) disposent d'une liberté de mouvement suffisante sur leurs éléments d'appui (11) pour pouvoir être déformés et saisis celles-ci, avant le retrait du carter (1).

**7.** Dispositif de montage selon la revendication 6, caractérisé en ce que, les surfaces d'appui (12c) des éléments (11) sont légèrement plus recourbés sur eux-mêmes que les coussinets (3) dans leur état initial, au moins partiellement.

**8.** Dispositif de montage selon la revendication 5, 6 ou 7, caractérisé en ce que la pince (7) est montée sur un robot.

**9.** Dispositif de montage selon la revendication 5, 6 ou 7, caractérisé en ce que la pince (7) est montée sur une machine d'assemblage.
